# EUROPÄISCHE PATENTSCHRIFT

(11) **EP 0 546 527 B1**
(45) Veröffentlichungstag und Bekanntmachung des Hinweises auf die Patenterteilung: **01.05.1996**
(21) Anmeldenummer: 92121001.9
(22) Anmeldetag: 09.12.1992
(51) Int. Cl.: B01D 53/14, B01D 53/52, C01B 17/04

(54) **Verfahren zur Reinigung eines H2S- und Stickstoff-haltigen Rohgases**
Process for the purification of a H2S and nitrogen containing crude gas
Procédé de purification d'un gaz brut contenant de H2S et d'azote

(30) Priorität: 13.12.1991 DE 4141173
(43) Veröffentlichungstag der Anmeldung: 16.06.1993
(73) Patentinhaber: Linde Aktiengesellschaft, D-65189 Wiesbaden (DE)
(72) Erfinder: Förg, Wolfgang, Dipl.-Phys., W-8012 Icking (DE); Ranke, Gerhard, Dipl.-Ing., W-8134 Pöcking (DE); Heisel, Michael, Dr. Dipl.-Ing., W-8023 Pullach (DE)
(74) Vertreter: Kasseckert, Rainer

(56) Entgegenhaltungen:
- EP-A- 0 270 223
- EP-A- 0 375 077
- EP-A- 0 455 285
- DE-A- 2 329 608
- US-A- 4 150 104

## Beschreibung

Die Erfindung betrifft ein Verfahren zur Reinigung eines zumindestens H₂S und (eine) Stickstoff-haltige Komponente(n) wie NH₃ und/oder HCN enthaltenden Rohgases in einer Wasserwäsche und Abkühlung, einer physikalisch oder chemisch wirkenden Sauergaswäsche mit Regenerierung des Waschmittels und einer Schwefelgewinnung, wobei das bei der Wasserwäsche und Abkühlung anfallende, Sauergase und Stickstoffverbindungen enthaltende Sauerwasser zur Entfernung der gelösten Gase gestrippt wird, wobei aus dem aus der Wasserwäsche abgezogenen Gas in der Sauergaswäsche zumindest H₂S entfernt und ein schwefelfreies Produktgas gewonnen wird und wobei das bei der Regenerierung des beladenen Waschmittels aus der Sauergaswäsche anfallende H₂S zur Schwefelgewinnung in elementaren Schwefel umgesetzt wird.

In Rohgasen, die beispielsweise durch partielle Oxidation von Kohlenstoff-haltigen Stoffen wie beispielsweise Kohle, Raffinerierückstandsölen oder Teersanden gewonnen werden oder als Raffineriegase anfallen, sind in der Regel auch Stickstoff-haltige Komponenten wie NH₃ und HCN, sowie andere Spurenbestandteile wie Ameisensäure und Chlorverbindungen enthalten. Diese Bestandteile des Rohgases sind gut in Wasser löslich und werden daher durch die Wasserwäsche und Gasabkühlung mit dem anfallenden Sauerwasser ausgeschleust. Üblicherweise wird das Sauerwasser zur Entsorgung in einer Strippsäule mit Strippgas gestrippt, wobei die flüchtigen Gase zusammen mit NH₃ und HCN abgetrieben werden. Das Restwasser, welches noch die Hauptmenge der Säuren und Chlorverbindungen enthält, wird in einer nachfolgenden Abwasseraufbereitungsanlage entsorgt.

Durch die Wasserwäsche und Gasabkühlung wird aus dem Rohgas ein kleiner Teil der in diesem enthaltenen Sauergase entfernt. Bei der Strippung des Sauerwassers werden auch die in Sauerwasser gelösten Sauergase durch das Strippgas abgetrieben. Das aus der Sauerwasserstrippung gewonnene Gas enthält also sowohl Sauergas- als auch Stickstoff-Komponenten.

Eine Weiterbehandlung des Gases aus der Sauerwasserstrippung ist erforderlich, da eine Verbrennung ohne Vor- oder Nachbehandlung wegen des H₂S-Gehaltes im Gas aus der Sauerwasserstrippung zu unerlaubten Schadstoffemissionen führen würde.

Aus der eigenen DE-OS 30 47 830 ist ein Verfahren zur Reinigung eines mindestens mit CO₂ und H₂S verunreinigten Gasstromes durch eine für H₂S selektive Sauergaswäsche bekannt, wobei das durch die selektive Wäsche gewonnene H₂S teilweise zu SO₂ oxidiert wird und in einer Schwefelgewinnungsanlage H₂S und SO₂ entsprechend der Claus-Reaktion in elementaren Schwefel und Wasser umgesetzt wird. Das aus der Schwefelgewinnungsanlage stammende Abgas wird hydriert und anschließend zur Sauergaswäsche zurückgeleitet.

Aus der eigenen DE-OS 38 42 599 ist bekannt ein unter anderem NH₃- und H₂S-haltiges Abwasser aus einer einer Claus-Anlage, die auch einen Claus-Ofen umfaßt, und einer Nachverbrennung nachgeschalteten Waschstufe mit Wasserwäsche und SO₂-Wäsche zu strippen. Das bei der Strippung freiwerdende Gas wird der Verbrennung im Claus-Ofen zugeführt. Eine Einspeisung des wie oben beschrieben gewonnenen Gases aus einer Sauerwasserstrippung in den Claus-Ofen einer Claus-Anlage führt, insbesondere bei niedrigen H₂S-Gehalten im Rohgas - niedrige H₂S-Gehalte im Rohgas bedeuten etwa einen H₂S-Anteil an den Sauergasen unterhalb 50 Vol% - zu Betriebsproblemen durch Rußbildung, durch unvollständige NH₃-Verbrennung und durch Verlegungen durch Ammoncarbonat bzw. -carbamat, wodurch die Funktionsfähigkeit der Claus-Anlage beinträchtigt wird. Eine prinzipiell mögliche katalytische Zersetzung des NH₃ in N₂ und H₂ ist energetisch und kostenmäßig sehr aufwendig, da für die Umsetzung hohe Temperaturen benötigt werden.

Der Erfindung liegt die Aufgabe zugrunde, ein Verfahren der eingangs genannten Art aufzuzeigen, welches auf einfache Art und Weise ein schwefelfreies Produktgas sicherstellt, im Rohgas enthaltene Schwefelverbindungen als elementaren Schwefel zurückgewinnt und insbesondere eine derartige Bearbeitung von Rohgasen mit kleinerem H₂S-Gehalt, wie sie beispielsweise in Gas- und Dampfturbinen-Kraftwerken (GuD-Kraftwerken) mit einer partiellen Oxidation von Kohlenstoff-haltigen Einsatzstoffen vorliegen, überhaupt erst ermöglicht.

Diese Aufgabe wird erfindungsgemäß dadurch gelöst, daß das aus der Sauerwasserstrippung gewonnene H₂S-haltige Gas einer Verbrennung zugeführt wird, daß die Schwefelgewinnung katalytisch durch Umsetzung des H₂S in elementaren Schwefel durch Direktoxidation und/oder Claus-Reaktion in einem Reaktor stattfindet und daß auch das Abgas der Verbrennung der Sauerwasserstrippgase in den Reaktor zur Umsetzung des H₂S in elementaren Schwefel eingeleitet wird.

Die Erfindung basiert auf der Idee, das Abgas einer Verbrennung des Sauerwasserstrippergases in einem Reaktor mit dem aus der Sauergaswäsche anfallenden H₂S katalytisch in elementaren Schwefel umzusetzen. Durch diese Verfahrensführung wird es möglich, Schwefel aus im Sauerwasser enthaltenen Schwefelverbindungen in einem Reaktor gemeinsam mit dem in der Sauergaswäsche anfallenden H₂S zu Elementarschwefel umzusetzen. Im Verbrennungsabgas enthaltenes SO₂ wird entsprechend der Claus-Reaktion mit aus der Sauergaswäsche anfallendem H₂S katalytisch in elementaren Schwefel umgesetzt. Das restliche H₂S wird durch Direktoxidation mit Sauerstoff im Reaktor katalytisch in Elementarschwefel umgewandelt. Der hierzu benötigte Sauerstoff kann durch Zugabe von Sauerstoff und/oder Sauerstoff-haltigen Gasen in den Reaktor sichergestellt werden. In den Reaktor eingeleitete Kohlenwasserstoffe wirken sich nicht störend auf das erfindungsgemäße Verfahren aus, da die im Reaktor vorliegenden Temperaturen nicht für eine Spaltung der Kohlenwasserstoffe ausreichen.

Das erfindungsgemäße Verfahren erreicht eine Schwefelgewinnung ohne Claus-Ofen, wodurch die Anlage auch bei Lastschwankungen betrieben werden kann. Da im Reaktor keine Verbrennung stattfindet, ist eine hohe H₂S- Konzentration im Rohgas nicht erforderlich. Das erfindungsgemäße Verfahren ist daher insbesondere geeignet für Rohgase mit geringem H₂S-Gehalt. Rohgase mit niedrigem H₂S-Gehalt können im erfindungsgemäßen Verfahren problemlos bearbeitet werden, da das H₂S katalytisch mit O₂ bzw. SO₂ zu elementarem Schwefel umgesetzt wird, d.h. keine Verbrennung mit einer erforderlichen Mindesttemperatur stattfindet. Hierin liegt der wesentliche Vorteil des erfindungsgemäßen Verfahrens gegenüber üblichen Verfahren mit Einsatz einer Claus-Anlage mit einem Claus-Ofen. Im erfindungsgemäßen Verfahren wird das Sauerwasserstrippergas als Heizgas verwendet. Die Verbrennung findet dabei in einem Ofen statt, der wesentlich kleiner ausfällt als ein Claus-Ofen.

Das erfindungsgemäße Verfahren eignet sich besonders zur Anwendung in GuD-Kraftwerken, insbesondere bei der Verbrennung von schwefelarmen Kohlen wie beispielsweise Braunkohle. Ein weiterer Vorteil des erfindungsgemäßen Verfahrens liegt darin, daß sich im Rohgas enthaltene Stickstoffverbindungen gerade wegen der erfindungsgemäßen Verfahrensführung nicht störend auswirken.

Besondere Vorteile des erfindungsgemäßen Verfahrens ergeben sich, wenn die Verbrennung des Gases aus der Sauerwasserstrippung unter Sauerstoffüberschuß durchgeführt wird. Der Sauerstoffüberschuß wird durch Zugabe von Sauerstoff und/oder Sauerstoff-haltigen Gasen, vorzugsweise Luft, in die Verbrennung des Gases aus der Sauerwasserstrippung erreicht. Der Sauerstoffüberschuß wird dabei so eingestellt, daß im Reaktor eine vollständige Umsetzung des H₂S in elementaren Schwefel sichergestellt wird.

In Weiterbildung der Erfindung wird das aus dem Reaktor nach Abtrennung des elementaren Schwefels erhaltene Abgas einer Nachreinigung unterzogen. Mit Vorteil werden in der Nachreinigung abgetrennte Schwefelverbindugen in den Prozeß vor den Reaktor zurückgeführt und damit im Reaktor in elementaren Schwefel umgesetzt. Das bedeutet ein umweltfreundlicheres Verfahren bei einer höheren Schwefelrückgewinnung.

Die Nachreinigung kann aus einer Hydrierstufe bestehen, wobei als Hydriergas Wasserstoff oder eine Teilmenge des entschwefelten Produktgases, das aus der Sauergaswäsche gewonnen wird, eingesetzt wird. In der Nachreinigung durch eine Hydrierung werden im Abgas enthaltene Schwefelverbindungen, beispielsweise SO₂, Elementarschwefel oder organische Schwefelverbindungen, zu H₂S hydriert, auf einen Druck des aus der Wasserwäsche abgezogenen und abgekühlten Gases verdichtet und diesem vor der Sauergaswäsche zugemischt. In einer anderen Ausgestaltung besteht die Nachreinigung aus einer wie oben beschriebenen Hydrierstufe und einer der Hydrierung nachgeschalteten physikalisch oder chemisch wirkenden, für H₂S selektiven Sauergaswäsche. Das aus der der Hydrierung nachgeschalteten selektiven H₂S-Wäsche gewonnene H₂S-haltige Gas kann direkt in den Reaktor eingeleitet und dort in elementaren Schwefel umgesetzt werden.

Als Sauergaswäsche zwischen Wasserwäsche und Reaktor zur Schwefelgewinnung im erfindungsgemäßen Verfahren kann jede bekannte, chemisch oder physikalisch wirkenden Sauergaswäsche verwendet werden. In der Sauergaswäsche wird im Fall einer nicht für H₂S selektiven Sauergaswäsche auch im Rohgas enthaltenes CO₂ absorbiert. Wird im erfindungsgemäßen Verfahren als Sauergaswäsche vor dem Reaktor ein für H₂S selektive Sauergaswäsche verwendet und wird außerdem die der Hydrierung nachgeschaltete ebenfalls selektive H₂S-Wäsche mit demselben Waschmittel betrieben, so können mit Vorteil die beiden Waschmittelkreisläufe kombiniert werden. Da die der Hydrierung nachgeschaltete H₂S-Wäsche in der Regel wesentlich kleiner als die H₂S-Wäsche vor dem Reaktor zur Schwefelgewinnung ausfällt, wird vorteilhafterweise das beladene Waschmittel aus der H₂S-Wäsche nach der Hydrierung in der Regenerierung der H₂S-Wäsche vor dem Reaktor zusammen mit dem beladenen Waschmittel aus der H₂S-Wäsche vor dem Reaktor regeneriert und als Waschmittel in der H₂S-Wäsche nach der Hydrierung ein Teilstrom des regenerierten Waschmittels aus der Regenerierung der H₂S-Wäsche vor dem Reaktor eingesetzt.

In anderer Weiterbildung des erfindungsgemäßen Verfahrens kann die Nachreinigung aber auch aus einer Nachverbrennung mit Rauchgasnachbehandlung bestehen. Hierbei ist jede bekannte Rauchgasnachbehandlung verwendbar. Bevorzugt wird eine Rauchgasnachbehandlung mit einer SO₂-Wäsche durchgeführt. Das aus der SO₂-Wäsche der Rauchgasnachbehandlung gewonnene SO₂ kann direkt zur Reaktion mit H₂S in den Reaktor der Schwefelgewinnung gegeben werden.

In zusätzlicher Weiterbildung der Erfindung kann das aus der Nachreinigung anfallende Restgas, nach Rückverdichtung auf den Druck des Produktgases aus der Sauergaswäsche vor dem Reaktor, dem Produktgas zugemischt werden. Diese Verfahrensführung ist insbesondere bei GuD-Kraftwerken vorteilhaft.

Das erfindungsgemäße Verfahren soll im folgenden anhand eines Ausführungsbeispieles für den Anwendungsfall des GuD-Kraftwerkes näher erläutert werden.

Hierbei zeigen:
- Figur 1:: ein Blockdiagramm des erfindungsgemäßen Verfahrens und
- Figur 2:: ein vereinfachtes Verfahrensschema für dieses Ausführungsbeispiel.

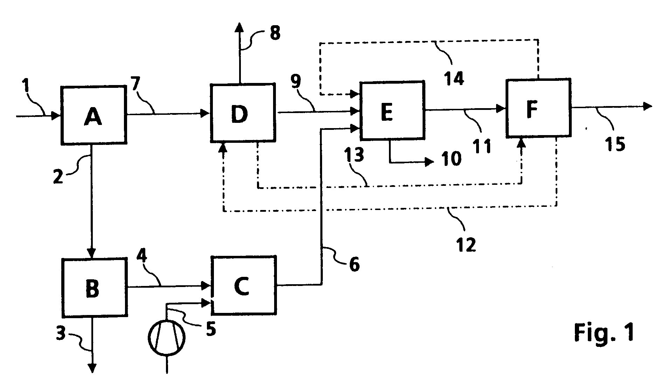

In Figur 1 wird eine Verfahrensführung eines Ausführungsbeispiels der Erfindung in einem Blockdiagramm dargestellt. Über Leitung 1 gelangt Rohgas aus der partiellen Oxidation von beispielsweise Kohle in einem GuD-Kraftwerk zur Gasabkühlung und Wasserwäsche in A. Anfallendes Sauerwasser in Leitung 2 wird zur Sauerwasserstrippung B geleitet. Das aus der Sauerwasserstrippung anfallende Abwasser wird über Leitung 3 einer Weiterbehandlung in einer Abwasseraufbereitunganlage zugeführt. Das bei der Sauerwasserstrippung ausgestrippte Gas, das Sauerwasserstrippergas, wird über Leitung 4 zur Verbrennung C geführt. Über Leitung 5 werden Sauerstoff und/oder Sauerstoff-haltige Gase, vorzugsweise Luft, verdichtet in die Verbrennung gegeben, wobei die Verbrennung C unter Sauerstoffüberschuß durchgeführt wird. Das Verbrennungsabgas der Verbrennung C steht in Leitung 6 zur Weiterverwendung im Verfahren zur Verfügung.

Der aus der Gasabkühlung und Wasserwäsche erhaltene Gasstrom in Leitung 7 wird in die Verfahrensstufe D der Sauergaswäsche geleitet. Durch die Sauergaswäsche wird entschwefeltes Produktgas gewonnen, welches beim Anwendungsfall des GuD-Kraftwerkes zur Gasturbine geleitet wird. Die bei der Regenerierung des Waschmittels in der Sauergaswaschstufe D anfallende H₂S-haltige Fraktion wird über Leitung 9 dem Reaktor der katalytischen Schwefelgewinnungsstufe E zugeführt. Ebenfalls in den Reaktor wird das Abgas der Verbrennung C aus Leitung 6 eingeleitet. Der durch katalytische Direktoxidation oder Claus-Reaktion umgesetzte Elementarschwefel wird über Leitung 10 abgezogen.

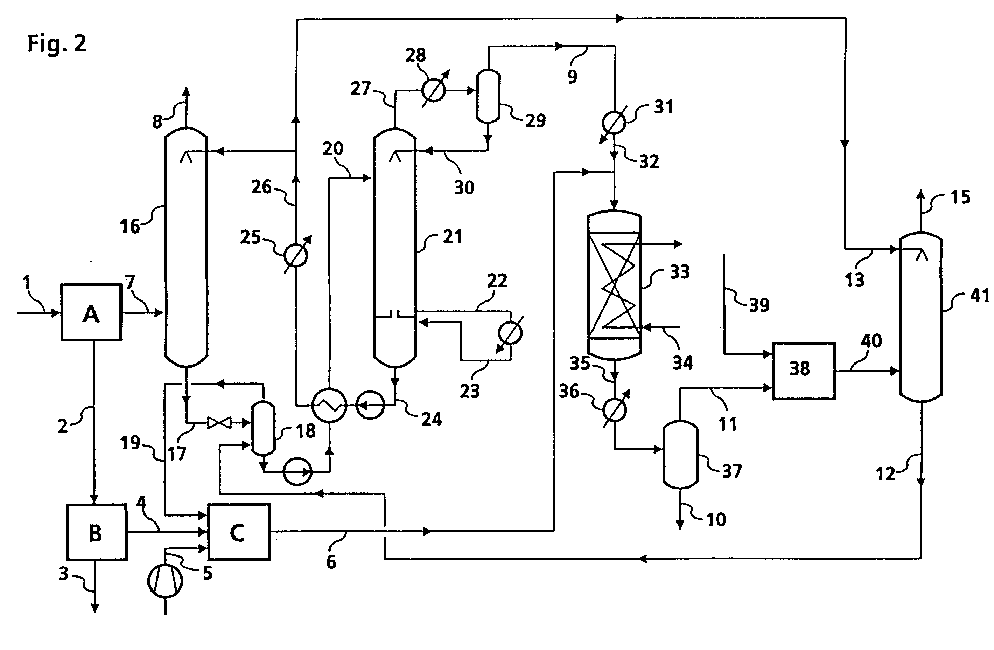

Das aus der Schwefelgewinnungsstufe E anfallende Gas wird über Leitung 11 der Nachreinigungsstufe F zugeführt. Besteht diese beispielsweise aus einer Hydrierung und anschließender selektiver H₂S-Wäsche und wird die H₂S-Wäsche der Nachreinigungsstufe F mit demselben Waschmittel wie die Sauergaswäsche D betrieben, so kann, wie in Figur 2 ausgeführt, das in der H₂S-Wäsche der Nachreinigungsstufe F beladene Waschmittel über Leitung 12 in die Regenerierung der Sauergaswaschstufe D eingespeist werden. Ein Teilstrom des durch die Regenerierung der Sauergaswaschstufe D gewonnenen regenerierten Waschmittels wird in diesem Fall über Leitung 13 zur H₂S-Wäsche der Nachreinigungsstufe F geführt. Besteht die Nachreinigungsstufe F aber aus einer Nachverbrennung mit anschließender SO₂-Wäsche, so wird das dabei gewonnene SO₂-haltige Gas direkt über Leitung 14 in den Reaktor der Schwefelgewinnungsstufe E eingespeist. Aus der Nachreinigungsstufe anfallendes Restgas in Leitung 15 kann über einen Kamin abgegeben werden. Für den Anwendungsfall des GuD-Kraftwerkes besteht aber auch die vorteilhafte Möglichkeit, das Restgas aus Leitung 15 nach Verdichtung dem Produktgas in Leitung 8 zuzumischen und somit zur Energiegewinnung zu nutzen.

In Figur 2 wird das im Blockdiagramm in Figur 1 dargestellte Verfahren durch einfache schematische Ausgestaltungen der Verfahrensstufen D, E und F gezeigt. Zur besseren Übersicht sind äquivalente Verfahrensstufen und Leitungen zum Blockdiagramm nach Figur 1 in Figur 2 mit identischen Bezugsziffern versehen.

Das aus der Gasabkühlung und Wasserwäsche abgezogene Gas in Leitung 7 wird in die Waschsäule 16 einer für H₂S selektiven, chemisch oder physikalisch wirkenden Sauergaswäsche eingeleitet. Mit H₂S beladenes Waschmittel wird über Leitung 17 vom Sumpf der Waschsäule 16 abgezogen, entspannt und in den Abscheider 18 geführt. Vor allem ausgasende Inerte, aber auch zu einem geringen Teil ausgasendes H₂S wird vom Abscheider 18 über Leitung 19 in die Verbrennungsstufe C geleitet, wo im Gas enthaltenes H₂S zu SO₂ oxidiert wird. Das beladene Waschmittel wird vom Abscheider 18 nach Wärmetausch mit regeneriertem Waschmittel über Leitung 20 in die Regeneriersäule 21 eingespeist. Die Regeneriersäule 21 weist einen Zwischenboden auf, über dem Waschmittel über Leitung 22 abgezogen und nach zumindest teilweiser Verdampfung über Leitung 23 in den unteren Teil der Regenerierkolonne 21 unterhalb des Zwischenbodens eingespeist wird. Der Dampf aus Leitung 23 dient als Strippgas in der Regeneriersäule 21. Vom Sumpf der Regeneriersäule 21 wird regeneriertes Waschmittel über Leitung 24 abgezogen und nach Wärmetausch mit beladenem Waschmittel aus Leitung 20 und Anwärmung 25 über Leitung 26 in die Waschsäule 16 gepumpt. Vom Kopf der Regeneriersäule 21 über Leitung 27 abgezogenes Gas wird gekühlt (28) und einem Abscheider 29 zugeführt. Durch die Kühlung 28 erhaltenes Kondensat wird über Leitung 30 vom Abscheider 29 zum Kopf der Regeneriersäule 21 zurückgeführt. Die H₂S-haltige Gasfraktion wird über Leitung 9 vom Abscheider 29 nach Erhitzen (31) in den Reaktor 33 über Leitung 32 eingespeist. Das Verbrennungsabgas aus Leitung 6 der Verbrennungsstufe C wird durch Zumischung zur H₂S-Fraktion in Leitung 32 ebenfalls dem Reaktor 33 zugeführt. Der mit einem Katalysator gefüllte Reaktor 33 ist über ein Kühlmittel 34 im Gegenstrom indirekt innengekühlt. Im Reaktor 33 findet die Umsetzung der Schwefelkomponenten in elementaren Schwefel durch katalytische Direktoxidation und/oder Claus-Reaktion statt. Der vom Reaktor abgezogene Gasstrom 35 wird nach Kühlung (36) dem Abscheider 37 zugeführt, wo auskondensierter elementarer Schwefel über Leitung 10 abgezogen wird. Der vom Abscheider über Leitung 11 abgezogene Gasstrom wird einer Hydrierung 38 unterzogen, wobei über Leitung 39 das zur Hydrierung notwendige Hydriergas bereitgestellt wird. In der Hydrierung 38 werden im Gasstrom 11 enthaltene Schwefelverbindungen zu H₂S hydriert und über Leitung 40 einer für H₂S selektiven Waschsäule 41 zugeführt. Über Leitung 13 wird ein Teilstrom des in der Regenerierkolonne 21 regenerierten Waschmittels aus Leitung 26 in die Waschsäule 41 geleitet. Vom Sumpf der Waschsäule 41 abgezogenes beladenes Waschmittel wird über Leitung 12 in den Abscheider 18 gegeben und damit in den Waschmittelkreislauf der Sauergaswäsche vor dem Reaktor 33 eingespeist. Vom Kopf der Waschsäule 41 wird über Leitung 15 schwefelfreies Restgas abgezogen, das nach Verdichtung dem Produktgas 8 zugemischt werden kann.

## Patentansprüche

1. Verfahren zur Reinigung eines zumindestens H₂S und eine oder mehrere Stickstoff-haltige Komponenten wie NH₃ und/oder HCN enthaltenden Rohgases (1) in einer Wasserwäsche und Abkühlung (A), einer physikalisch oder chemisch wirkenden Sauergaswäsche mit Regenerierung des Waschmittels (D; 16, 21) und einer Schwefelgewinnung (E),
wobei das bei der Wasserwäsche und Abkühlung (A) anfallende, Sauergase und Stickstoffverbindungen enthaltende Sauerwasser (2) zur Entfernung der gelösten Gase gestrippt wird (B),
wobei aus dem aus der Wasserwäsche (A) abgezogenen Gas (7) in der Sauergaswäsche (D; 16) zumindest H₂S entfernt und ein schwefelfreies Produktgas (8) gewonnen wird und
wobei das bei der Regenerierung (21) des beladenen Waschmittels (17) aus der Sauergaswäsche (D; 16) anfallende H₂S (9) zur Schwefelgewinnung (E; 33) in elementaren Schwefel (10) umgesetzt wird,
**dadurch gekennzeichnet**,
daß das aus der Sauerwasserstrippung (B) gewonnene H₂S-haltige Gas (4) einer Verbrennung (C) zugeführt wird,
daß die Schwefelgewinnung (E) katalytisch durch Umsetzung des H₂S in elementaren Schwefel (10) durch Direktoxidation und/oder Claus-Reaktion in einem Reaktor (33) stattfindet und
daß auch das Abgas (6) der Verbrennung (C) der Sauerwasserstripp-gase (4) in den Reaktor (33) zur Umsetzung des H₂S in elementaren Schwefel eingeleitet wird.

2. Verfahren nach Anspruch 1, dadurch gekennzeichnet, daß in die Verbrennung (C) des Gases (4) aus der Sauerwasserstrippung (B) Sauerstoff und/oder Sauerstoff-haltige Gase (5), vorzugsweise Luft, in einer Menge zugegeben werden, die im Reaktor (33) eine vollständige Umsetzung des H₂S in elementaren Schwefel gewährleistet.

3. Verfahren nach einem der Ansprüche 1 oder 2, dadurch gekennzeichnet, daß das aus dem Reaktor (33) nach Abtrennung des elementaren Schwefels (10) erhaltene Abgas (11) einer Nachreinigung (F) unterzogen wird.

4. Verfahren nach Anspruch 3, dadurch gekennzeichnet, daß in der Nachreinigung (F) abgetrennte Schwefelverbindungen (12, 14) in den Prozess vor den Reaktor (33) zurückgeführt und im Reaktor (33) in elementaren Schwefel umgesetzt werden.

5. Verfahren nach einem der Ansprüche 3 oder 4, dadurch gekennzeichnet, daß die Nachreinigung (F) aus einer Hydrierstufe (38) besteht, wobei als Hydriergas (39) Wasserstoff oder eine Teilmenge des entschwefelten Produktgases eingesetzt wird und wobei die im Abgas (11) enthaltenen Schwefelverbindungen in der Hydrierstufe (38) zu H₂S hydriert und nach Verdichtung dem aus der Wasserwäsche abgezogenen und abgekühlten Gas vor der Sauergaswäsche zugemischt werden.

6. Verfahren nach einem der Ansprüche 3 oder 4, dadurch gekennzeichnet, daß die Nachreinigung (F) aus einer Hydrierstufe (38), in der die im Abgas (11) enthaltenen Schwefelverbindungen mit Wasserstoff oder einer Teilmenge des entschwefelten Produktgases als Hydriergas (39) zu H₂S hydriert werden, und einer der Hydrierung (38) nachgeschalteten physikalisch oder chemisch wirkenden, selektiven H₂S-Wäsche (41) besteht.

7. Verfahren nach Anspruch 6, dadurch gekennzeichnet, daß das aus der der Hydrierung (38) nachgeschalteten selektiven H₂S-Wäsche (41) gewonnene H₂S-haltige Gas direkt in den Reaktor (33) eingeleitet und dort in elementaren Schwefel umgesetzt wird.

8. Verfahren nach Anspruch 6, dadurch gekennzeichnet, daß die Sauergaswäsche (D) vor dem Reaktor (33) eine selektive H₂S-Wäsche (16) ist und das beladene Waschmittel (12) aus der H₂S-Wäsche (41) nach der Hydrierstufe (38) in der Regenerierung (21) der H₂S-Wäsche (16) vor dem Reaktor (33) gemeinsam (20) mit dem beladenen Waschmittel (17) aus der H₂S-Wäsche (16) vor dem Reaktor (33) regeneriert wird und ein Teilstrom (13) des regenerierten Waschmittels (24, 26) als Waschmittel in der H₂S-Wäsche (41) nach der Hydrierstufe (38) eingesetzt wird.

9. Verfahren nach einem der Ansprüche 3 oder 4, dadurch gekennzeichnet, daß die Nachreinigung (F) aus einer Nachverbrennung mit Rauchgasnachbehandlung besteht.

10. Verfahren nach Anspruch 9, dadurch gekennzeichnet, daß die Rauchgasnachbehandlung eine SO₂-Wäsche enthält.

11. Verfahren nach Anspruch 10, dadurch gekennzeichnet, daß das aus der SO₂-Wäsche der Rauchgasnachbehandlung gewonnene SO₂ direkt in den Reaktor (33) der Schwefelgewinnung (E) gegeben wird.

12. Verfahren nach einem der Ansprüche 3, 4 oder 6 bis 11, dadurch gekennzeichnet, daß das aus der Nachreinigung (F) anfallende Restgas (15) nach Rückverdichtung dem Produktgas (8) zugemischt wird.

13. Anwendung des Verfahrens nach einem der Ansprüche 1 bis 12 auf die Rohgase eines Gas- und Dampfturbinen-Kraftwerkes.

## Claims

1. Process for cleaning a crude gas (1) containing at least H₂S and one or more nitrogen-containing components such as NH₃ and/or HCN in a water scrubber and cooler (A), a physically or chemically acting acid gas scrubber with regeneration of the scrubbing medium (D; 16, 21) and a sulphur recovery stage (E),
the acid water (2) which contains acid gases and nitrogen compounds and arises in the water scrubber and cooler (A) being stripped (B) to remove the dissolved gases,
at least H₂S being removed in the acid gas scrubber (D; 16) from the gas (7) taken off from the water scrubber (A) and a sulphur-free product gas (8) being produced and the H₂S (9) arising from the acid gas scrubber (D; 16) in the regeneration (21) of the laden scrubbing medium (17) being converted for sulphur recovery (E; 33) into elemental sulphur (10),
characterized in that the H₂S-containing gas (4) produced from the acid water stripping (B) is fed to a combustion stage (C),
in that the sulphur recovery (E) takes place catalytically by conversion of the H₂S into elemental sulphur (10) by direct oxidation and/or Claus reaction in a reactor (33) and
in that the exhaust gas (6) of the combustion (C) of the acid water stripping gases (4) is also introduced into the reactor (33) for converting the H₂S into elemental sulphur.

2. Process according to Claim 1, characterized in that oxygen and/or oxygen-containing gases (5), preferably air, are added to the combustion (C) of the gas (4) from the acid water stripping (B) in an amount which ensures complete conversion of the H₂S into elemental sulphur in the reactor (33).

3. Process according to one of Claims 1 or 2, characterized in that the exhaust gas (11) obtained from the reactor (33) after separating off the elemental sulphur (10) is subjected to a final purification (F).

4. Process according to Claim 3, characterized in that sulphur compounds (12, 14) separated off in the final purification (F) are recycled to the process upstream of the reactor (33) and are converted into elemental sulphur in the reactor (33).

5. Process according to one of Claims 3 or 4, characterized in that the final purification (F) comprises a hydrogenation stage (38), the hydrogenation gas (39) used being hydrogen or a part-quantity of the desulphurized product gas and the sulphur compounds contained in the exhaust gas (11) being hydrogenated to H₂S in the hydrogenation stage (38) and, after compression, being admixed upstream of the acid gas scrubber to the gas taken off from the water scrubber and cooled.

6. Process according to one of Claims 3 or 4, characterized in that the final purification (F) comprises a hydrogenation stage (38), in which the sulphur compounds contained in the exhaust gas (11) are hydrogenated to H₂S by hydrogen or a part-quantity of the desulphurized product gas as hydrogenation gas (39), and a physically or chemically acting selective H₂S-scrubber (41) downstream of the hydrogenation (38).

7. Process according to Claim 6, characterized in that the H₂S-containing gas produced from the selective H₂S scrubber (41) downstream of the hydrogenation (38) is introduced directly into the reactor (33) and is there converted into elemental sulphur.

8. Process according to Claim 6, characterized in that the acid gas scrubber (D) upstream of the reactor (33) is a selective H₂S scrubber (16) and the laden scrubbing medium (12) from the H₂S scrubber (41) downstream of the hydrogenation stage (38) is regenerated in the regeneration (21) of the H₂S scrubber (16) upstream of the reactor (33) together (20) with the laden scrubbing medium (17) from the H₂S scrubber (16) upstream of the reactor (33) and a part-stream (13) of the regenerated scrubbing medium (24, 26) is used as scrubbing medium in the H₂S scrubber (41) downstream of the hydrogenation stage (38).

9. Process according to one of Claims 3 or 4, characterized in that the final purification (F) comprises afterburning with flue-gas post-treatment.

10. Process according to Claim 9, characterized in that the flue-gas post-treatment contains an SO₂ scrubber.

11. Process according to Claim 10, characterized in that the SO₂ produced from the SO₂ scrubber of the flue-gas post-treatment is directly introduced into the reactor (33) of the sulphur recovery stage (E).

12. Process according to one of Claims 3, 4 or 6 to 11, characterized in that the residual gas (15) arising from the final purification (F) is admixed to the product gas (8) after recompression.

13. Use of the process according to one of Claims 1 to 12 on the crude gases of a combined cycle gas turbine power station.

## Revendications

1. Procédé de nettoyage d'un gaz brut (1) contenant au moins H₂S et un ou plusieurs constituants azotés tels que NH₃ et/ou HCN, dans un épurateur et condensateur à eau (A), un laveur de gaz acides à action physique ou chimique avec régéneration du milieu lavant (D; 16, 21) et un étage de récupération du soufre (E),
l'eau acide (2) qui contient les gaz acides et les composés azotés et provient de l'épurateur et du condensateur à eau (A) étant rectifiée (B) pour éliminer les gaz dissous,
au moins H₂S étant éliminé dans le laveur de gaz acides (D; 16) du gaz (7) soutiré de l'épurateur à eau (A) et un produit gazeux sans soufre (8) étant produit et le H₂S (9) provenant de l'épurateur de gaz acides (D; 16) dans la régénération (21) du milieu lavant chargé (17) étant converti pour récupérer le soufre (E; 33) en soufre élémentaire (10),
caractérisé en ce que le gaz contenant H₂S (4) produit à la sortie de la rectification de l'eau acide (B) est chargé dans un étage de combustion (C),
en ce que la récupération du soufre (E) a lieu par catalyse, par conversion du H₂S en soufre élémentaire (10) par oxydation directe et/ou par réaction de Claus dans un réacteur (33) et
en ce que le gaz d'échappement (6) de la combustion (C) des gaz de rectification de l'eau acide (4) est aussi introduit dans le reacteur (33) pour convertir le H₂S en soufre élémentaire.

2. Procédé selon la revendication 1, caractérisé en ce que de l'oxygène et/ou des gaz contenant de l'oxygène (5), de préférence de l'air, sont ajoutés à la combustion (C) du gaz (4) sortant de la rectification de l'eau acide (B), en une quantité assurant une conversion complète du H₂S en soufre élémentaire dans le réacteur (33).

3. Procédé selon l'une quelconque des revendications 1 ou 2, caractérisé en ce que le gaz d'échappement (11) obtenu à partir du réacteur (33) après la séparation du soufre élémentaire (10) est soumis à une purification finale (F).

4. Procédé selon la revendication 3, caractérisé en ce que les composés soufrés (12, 14) séparés dans la purification finale (F) sont recyclés vers le procédé en amont du réacteur (33) et sont convertis en soufre élémentaire dans le réacteur (33).

5. Procédé selon l'une quelconque des revendications 3 ou 4, caractérisé en ce que la purification finale (F) comprend un étage d'hydrogénation (38), le gaz d'hydrogénation (39) utilisé étant de l'hydrogène ou une quantité partielle du produit gazeux désulfuré, et les composés soufrés contenus dans le gaz d'échappement (11) étant hydrogénés en H₂S dans l'étage d'hydrogénation (38) et étant, après compression, mélangés en amont de l'épurateur de gaz acides au gaz soutiré de l'épurateur à eau et condensés.

6. Procédé selon l'une quelconque des revendications 3 ou 4, caractérisé en ce que la purification finale (F) comprend un étage d'hydrogénation (38), dans lequel les composés soufrés contenus dans le gaz d'échappement (11) sont hydrogénés en H₂S par de l'hydrogène ou par une quantité partielle du produit gazeux désulfuré, en tant que gaz d'hydrogénation (39), et un épurateur de H₂S sélectif à action physique ou chimique (41) en aval de l'hydrogénation (38).

7. Procédé selon la revendication 6, caractérisé en ce que le gaz contenant H₂S produit à la sortie de l'épurateur de H₂S sélectif (41) en aval de l'hydrogénation (38) est introduit directement dans le réacteur (33) et y est converti en soufre élémentaire.

8. Procédé selon la revendication 6, caractérisé en ce que l'épurateur de gaz acides (D) en amont du réacteur (33) est un épurateur de H₂S sélectif (16) et le milieu lavant (12) chargé sortant de l'épurateur de H₂S (41) en aval de l'étage d'hydrogénation (38) est régénéré dans la régénération (21) de l'épurateur de H₂S (16) en amont du réacteur (33) en méme temps (20) que le milieu lavant chargé (17) sortant de l'épurateur de H₂S (16) en amont du réacteur (33) et un courant partiel (13) du milieu lavant régénéré (24, 26) est utilisé comme milieu lavant dans l'épurateur de H₂S (41) en aval de l'étage d'hydrogénation (38).

9. Procédé selon l'une quelconque des revendications 3 ou 4, caractérisé en ce que la purification finale (F) comprend une post-combustion avec un post-traitement des gaz d'échappement.

10. Procédé selon la revendication 9, caractérisé en ce que le post-traitement des gaz d'échappement contient un épurateur de SO₂.

11. Procédé selon la revendication 10, caractérisé en ce que le SO₂ produit par l'épurateur de SO₂ du posttraitement des gaz d'échappement est introduit directement dans le réacteur (33) de l'étage de récupération du soufre (E).

12. Procédé selon l'une quelconque des revendications 3, 4 ou 6 à 11, caractérisé en ce que la gaz résiduel (15) provenant de la purification finale (F) est mélangé au produit gazeux (8) après la recompression.

13. Utilisation du procédé selon l'une quelconque des revendications 1 à 12, sur les gaz bruts d'une centrale à turbine à gaz de recyclage combiné.
